# EUROPEAN PATENT APPLICATION

(11) **EP 4 213 568 A1**
(43) Date of publication of application: **19.07.2023**
(21) Application number: 20953301.7
(22) Date of filing: 11.09.2020
(51) Int. Cl.: H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2020/034509
(87) International publication number: WO 2022/054236

(57) **Abstract**

An aspect of a terminal according to the present disclosure includes a receiving section that receives a physical shared channel scheduled by a plurality of downlink control channels allocated to different time domains, and a control section that determines at least one of quasi-co-location (QCL) and a transmission configuration indication (TCI) state corresponding to the physical shared channel, based on a time offset between a specific downlink control channel of the plurality of downlink control channels and the physical shared channel and a given threshold.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010

### Summary of Invention

### Technical Problem

For future radio communication systems (for example, NR), a scheme in which one or a plurality of transmission/reception points (TRPs) (multi-TRPs) perform DL transmission (for example, PDSCH transmission) to a terminal (user terminal, User Equipment (UE)) by using one or a plurality of panels (multi-panels) has been under study.

In NR, it is assumed that repetition transmission is applied to a given channel (for example, a PDCCH). For example, it is considered that scheduling of DL transmission/UL transmission is controlled using a plurality of PDCCHs to which repetition transmission is applied from the multi-panels/TRPs.

However, in existing NR specifications, how to control repetition transmission from one or more TRPs has not been fully studied yet.

In view of this, the present disclosure has one object to provide a terminal, a radio communication method, and a base station with which communication can be appropriately performed even when repetition transmission is applied to a DL channel transmitted from one or more TRPs.

### Solution to Problem

A terminal according to an aspect of the present disclosure includes a receiving section that receives a physical shared channel scheduled by a plurality of downlink control channels allocated to different time domains, and a control section that determines at least one of quasi-co-location (QCL) and a transmission configuration indication (TCI) state corresponding to the physical shared channel, based on a time offset between a specific downlink control channel of the plurality of downlink control channels and the physical shared channel and a given threshold.

### Advantageous Effects of Invention

According to an aspect of the present disclosure, communication can be appropriately performed even when repetition transmission is applied to a DL channel transmitted from one or more TRPs.

### Brief Description of Drawings

[FIG. 1] FIG. 1A to FIG. 1D are each a diagram to show an example of a multi-TRP scenario.
[FIG. 2] FIG. 2 is a diagram to show an example of a case in which a PDSCH is scheduled using PDCCH repetition.
[FIG. 3] FIG. 3A and FIG. 3B are each a diagram to show an example of PDCCH repetition transmission control according to a first aspect.
[FIG. 4] FIG. 4 is a diagram to show an example of PDCCH repetition transmission control according to a second aspect.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.

### Description of Embodiments

### (TCI, Spatial Relation, and QCL)

For NR, control of reception processing (for example, at least one of reception, demapping, demodulation, and decoding) and transmission processing (for example, at least one of transmission, mapping, precoding, modulation, and coding) in the UE regarding at least one of a signal and a channel (hereinafter expressed as a signal/channel) based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal. The TCI state, QCL, and QCL assumption may be interchangeably interpreted.

Note that, in the present disclosure, the TCI state of DL may be interchangeably interpreted as spatial relation of UL, the TCI state of UL, or the like.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state (RRC "TCI-state IE") configured using higher layer signaling may include one or a plurality of pieces of QCL information ("QCL-Info"). The QCL information may include at least one of information related to the RS to have a QCL relationship (RS relation information) and information indicating a QCL type (QCL type information). The RS relation information may include information such as an index of the RS (for example, an SSB index, or a non-zero power CSI-RS (NZP CSI-RS) resource ID (Identifier)), an index of a cell in which the RS is located, and an index of a Bandwidth Part (BWP) in which the RS is located.

In Rel-15 NR, as the TCI state of at least one of the PDCCH and the PDSCH, both of the RS of QCL type A and the RS of QCL type D, or only the RS of QCL type A may be configured for the UE.

In a case where the TRS is configured as the RS for the QCL type A, unlike a demodulation reference signal (DMRS) for the PDCCH or the PDSCH, the TRS is expected to be transmitted such that the same TRS is periodically transmitted for an extended period of time. The UE can measure the TRS and calculate the average delay, the delay spread, and the like.

In a case where, for the UE, the TRS is configured as the RS for the QCL type A, in the TCI state of the DMRS for the PDCCH or the PDSCH, the UE can assume that the DMRS for the PDCCH or the PDSCH is the same as the QCL type A parameters (average delay, delay spread, and the like) for the TRS. Thus, the type A parameters (average delay, delay spread, and the like) for the DMRS for the PDCCH or the PDSCH can be determined from measurement results for the TRS. When performing channel estimation for at least one of the PDCCH and the PDSCH, the UE can use the measurement results for the TRS to perform more accurate channel estimation.

In a case where the RS for the QCL type D is configured for the UE, the UE can use the RS for the QCL type D to determine the UE receive beam (spatial domain reception filter, and UE spatial domain reception filter).

The RS for QCL type X for the TCI state may mean the RS in the QCL type X relation with (the DMRS for) a given channel/signal, and the RS may be referred to as a QCL source of the QCL type X for the TCI state.

### (TCI State for PDCCH)

Information related to the QCL between the PDCCH (or a DMRS antenna port related to the PDCCH) and a given RS may be referred to as a TCI state for the PDCCH or the like.

The UE may determine the TCI state for a UE-specific PDCCH (or a CORESET corresponding to the PDCCH), based on higher layer signaling. For example, one or a plurality (K) of TCI states may be configured for the UE for each CORESET by using RRC signaling.

For the UE, for each CORESET, one of the plurality of TCI states configured by using RRC signaling may be activated by using the MAC CE. The MAC CE may be referred to as a "TCI state indication for UE-specific PDCCH MAC CE". The UE may perform monitoring of the CORESET, based on an active TCI state corresponding to the CORESET.

### (TCI State for PDSCH)

Information related to the QCL between the PDSCH (or a DMRS antenna port related to the PDSCH) and a given DL-RS may be referred to as a TCI state for the PDSCH or the like.

M (M ≥ 1) TCI states for the PDSCH (M pieces of QCL information for the PDSCH) may be indicated (configured) for the UE by using higher layer signaling. Note that the number M of TCI states configured for the UE may be restricted by at least one of a UE capability and the QCL type.

The DCI used for scheduling of the PDSCH may include a field (which may be referred to as, for example, a TCI field, a TCI state field, or the like) indicating the TCI state for the PDSCH. The DCI may be used for scheduling of the PDSCH of one cell, and may be referred to as, for example, DL DCI, DL assignment, DCI format 1_0, DCI format 1_1, or the like.

Whether or not the TCI field is included in the DCI may be controlled with information indicated from the base station to the UE. The information may be information (for example, TCI presence information, information of TCI presence in DCI, higher layer parameter TCI-PresentInDCI) indicating whether the TCI field is present or absent in the DCI. The information may be, for example, configured for the UE by using higher layer signaling.

When more than eight types of TCI states are configured for the UE, eight or less types of TCI states may be activated (or specified), using the MAC CE. The MAC CE may be referred to as a "TCI states activation/deactivation for UE-specific PDSCH MAC CE". The value of the TCI field in the DCI may indicate one of the TCI states activated using the MAC CE.

When the TCI presence information set as "enabled" is configured for the UE for the CORESET for scheduling the PDSCH (CORESET used for PDCCH transmission for scheduling the PDSCH), the UE may assume that the TCI field is present in DCI format 1_1 of the PDCCH transmitted on the CORESET.

For application of the TCI state for the PDSCH, a plurality of cases as below can be considered.

### <Case 0>

A case is assumed in which a higher layer parameter (for example, tci-PresentInDCI) indicating whether a field (for example, the TCI field) for indicating the TCI state is present in the DCI is configured enabled, and a time offset is equal to or greater than a threshold (for example, timeDurationForQCL). In this case, a given (for example, 3-bit) DCI field (for example, the TCI field) may be present in a given DCI format, and the DCI field may indicate any (one) TCI state out of a maximum of eight active TCI states for the PDSCH. The given DCI format may be, for example, DCI format 1_1 or 1_2.

When the time offset between the received DCI (or PDCCH) and its corresponding PDSCH is equal to or greater than the threshold, the UE may assume that the DMRS port of the PDSCH is quasi-colocated (QCL) with the reference signal (RS) in the TCI state indicated by the DCI.

The time offset (for example, time offset) corresponds to a period of time between reception of DL DCI (or PDCCH) and reception of its corresponding PDSCH. The threshold (for example, timeDurationForQCL) compared with the time offset may be based on a UE capability reported in order to determine PDSCH antenna port QCL. The time offset may refer to a period of time between the last symbol of the PDCCH (or DCI/CORESET) and the start symbol of the PDSCH in the time domain.

The threshold may be referred to as time duration for QCL, a "timeDurationForQCL", a "Threshold", a "Threshold for offset between a DCI indicating a TCI state and a PDSCH scheduled by the DCI", a "Threshold-Sched-Offset", a time offset threshold, a schedule offset threshold, a scheduling offset threshold, or the like.

The time duration for QCL may be based on the UE capability, and may be, for example, based on a delay that is required for decoding of the PDCCH and beam switching. The time duration for QCL may be a minimum period of time that is required for the UE to perform PDCCH reception and application of spatial QCL information received in the DCI for PDSCH processing. The time duration for QCL may be represented by the number of symbols for each subcarrier spacing, or may be represented by time (for example, ps). Information of the time duration for QCL may be reported from the UE to the base station as UE capability information, or may be configured from the base station to the UE by using higher layer signaling.

### <Case 1>

When the time offset is less than the threshold regardless of whether tci-PresentInDCI is enabled, the UE does not apply (cannot apply) the TCI state indicated by the DCI to reception of a corresponding PDSCH. In other words, the UE does not perform switching (cannot perform switching) of the TCI states for the PDSCH, based on the DCI. In this case, the UE may apply a default TCI state. The default TCI state may be the TCI state corresponding to the lowest CORESET ID in the latest monitored slot.

For example, when all of TCI code points are mapped to a single TCI state and the time offset is less than the threshold regardless of configurations of tci-PresentInDCI and tci-PresentInDCI-ForFormat1_2 in an RRC connected mode, the UE assumes that the DM-RS port of the PDSCH of a serving cell is quasi-colocated (QCLed) with the RS related to the QCL parameter used for QCL indication for the PDCCH of a specific CORESET. The specific CORESET is related to a monitored search space having the lowest controlResourceSetId in the latest slot in one or more CORESETs monitored by the UE in an active BWP of the serving cell. Note that, in the present disclosure, the condition of "in the latest slot" (in the latest monitored slot) may be omitted.

### <Case 2>

When tci-PresentInDCI is not enabled by RRC, the 3-bit DCI field (TCI field) is not present in DCI format 1_1 (DL allocation), and the DCI field cannot indicate any (one) TCI state out of a maximum of eight active TCI states for the PDSCH. In this case, the UE applies the default TCI state to the PDSCH.

For example, a case is assumed in which tci-PresentInDCI is not enabled (the PDSCH is scheduled in the DCI format in which the TCI field is not present), and the time offset is equal to or greater than the threshold (timeDurationForQCL). In this case, the UE may assume that the default TCI state is the TCI state (the same as the TCI state) of a scheduling CORESET (CORESET to be used), and apply the TCI state to the PDSCH (for example, assume QCL/TCI corresponding to the PDSCH).

### (Multi-TRP)

For NR, a scheme in which one or a plurality of transmission/reception points (TRPs) (multi-TRPs) perform DL transmission to the UE by using one or a plurality of panels (multi-panels) has been under study. A scheme in which the UE performs UL transmission to one or a plurality of TRPs has been under study as well.

Note that the plurality of TRPs may correspond to the same cell identifier (ID), or may correspond to different cell IDs. The cell ID may be a physical cell ID, or may be a virtual cell ID.

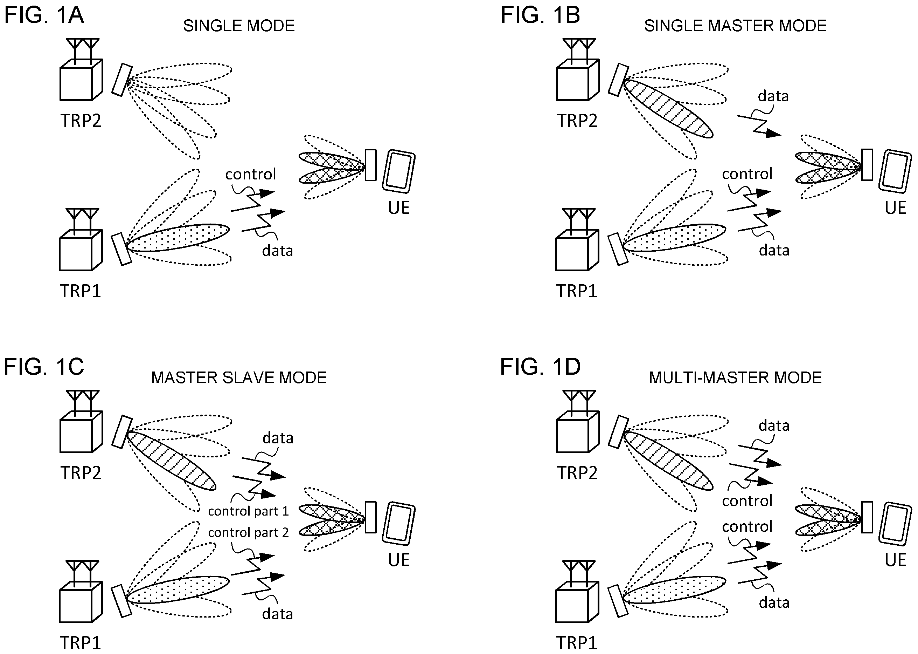

FIGS. 1A to 1D are each a diagram to show an example of a multi-TRP scenario. In these examples, it is assumed that each TRP can transmit four different beams. However, this is not restrictive.

FIG. 1A shows an example of a case (which may be referred to as a single mode, a single TRP, or the like) in which only one TRP (in the present example, TRP 1) out of the multi-TRPs performs transmission to the UE. In this case, TRP 1 transmits both of a control signal (PDCCH) and a data signal (PDSCH) to the UE.

FIG. 1B shows an example of a case (which may be referred to as a single master mode) in which only one TRP (in the present example, TRP 1) out of the multi-TRPs transmits a control signal to the UE, and the multi-TRPs transmit a data signal to the UE. The UE receives each PDSCH transmitted from the multi-TRPs, based on one piece of downlink control information (DCI).

FIG. 1C shows an example of a case (which may be referred to as a master slave mode) in which each of the multi-TRPs transmits a part of a control signal to the UE, and the multi-TRPs transmit a data signal to the UE. In TRP 1, part 1 of a control signal (DCI) may be transmitted, and in TRP 2, part 2 of the control signal (DCI) may be transmitted. Part 2 of the control signal may depend on part 1. The UE receives each PDSCH transmitted from the multi-TRPs, based on these parts of the DCI.

FIG. 1D shows an example of a case (which may be referred to as a multi-master mode) in which each of the multi-TRPs transmits different control signals to the UE, and the multi-TRPs transmit a data signal to the UE. In TRP 1, a first control signal (DCI) may be transmitted, and in TRP 2, a second control signal (DCI) may be transmitted. The UE receives each PDSCH transmitted from the multi-TRPs, based on these pieces of DCI.

When a plurality of PDSCHs (which may be referred to as multi-PDSCHs (multiple PDSCHs)) from the multi-TRPs as shown in FIG. 1B are scheduled using one piece of DCI, the piece of DCI may be referred to as single DCI (S-DCI, single PDCCH). When a plurality of PDSCHs from the multi-TRPs as shown in FIG. 1D are scheduled using a plurality of pieces of DCI, the plurality of pieces of DCI may be referred to as multi-DCI (M-DCI, multi-PDCCH (multiple PDCCHs)).

From each TRP of the multi-TRPs, codewords (Code Words (CWs)) and layers different from one another may be transmitted. As one mode of multi-TRPs transmission, non-coherent joint transmission (NCJT) has been under study.

In NCJT, for example, TRP 1 performs modulation mapping on a first codeword and then layer mapping so as to transmit a first PDSCH by using a first number of layers (for example, two layers) by means of first precoding. TRP 2 performs modulation mapping on a second codeword and then layer mapping so as to transmit a second PDSCH by using a second number of layers (for example, two layers) by means of second precoding.

Note that it may be defined that a plurality of PDSCHs (multi-PDSCHs) to be transmitted using NCJT partially or entirely overlap regarding at least one of the time and frequency domains. In other words, at least one of the time and frequency resources of the first PDSCH from the first TRP and the second PDSCH from the second TRP may overlap.

It may be assumed that the first PDSCH and the second PDSCH are not in a quasi-co-location (QCL) relationship (not quasi-colocated). Reception of the multi-PDSCHs may be interpreted as simultaneous reception of the PDSCHs that are not of a given QCL type (for example, QCL type D).

In URLLC for the multi-TRPs, support of PDSCH (transport block (TB) or codeword (CW)) repetition across the multi-TRPs has been under study. Support of repetition schemes across the multi-TRPs (URLLC schemes, for example, schemes 1, 2a, 2b, 3, and 4) in the frequency domain, the layer (spatial) domain, or the time domain has been under study. In scheme 1, the multi-PDSCHs from the multi-TRPs are multiplexed by space division multiplexing (SDM). In schemes 2a and 2b, the PDSCH from the multi-TRPs is multiplexed by frequency division multiplexing (FDM). In scheme 2a, a redundancy version (RV) is the same for the multi-TRPs. In scheme 2b, the RV may be the same or may be different for the multi-TRPs. In schemes 3 and 4, the multi-PDSCHs from the multi-TRPs are multiplexed by time division multiplexing (TDM). In scheme 3, the multi-PDSCHs from the multi-TRPs are transmitted in one slot. In scheme 4, the multi-PDSCHs from the multi-TRPs are transmitted in different slots.

According to the multi-TRP scenario as described above, more flexible transmission control using a channel with satisfactory quality can be performed.

NCJT using multi-TRPs/panels may use a high rank. In order to support ideal and non-ideal backhauls among a plurality of TRPs, both of the single DCI (single PDCCH; for example, FIG. 1B) and the multi-DCI (multi-PDCCHs; for example, FIG. 1D) may be supported. For both of the single DCI and the multi-DCI, the maximum number of TRPs may be 2.

For single PDCCH design (mainly for the ideal backhaul), enhancement of the TCI has been under study. Each TCI code point in the DCI may correspond to one or two TCI states. A TCI field size may be the same as that of Rel. 15.

Incidentally, in Rel. 17 or later versions, it is assumed that repetition transmission (PDCCH repetition) may be applied to the PDCCH(s) (or the DCI) transmitted from one or more TRPs. For example, it is considered that scheduling or transmission/reception indication for one or more signals/channels is performed using a plurality of PDCCHs (or pieces of DCI) transmitted from one or more TRPs.

The PDCCH/DCI to which the repetition transmission is applied may be referred to as multi-PDCCH/multi-DCI. The repetition transmission of the PDCCH may be interpreted as PDCCH repetition, a plurality of transmissions of the PDCCH, multi-PDCCH transmission, or multiple PDCCH transmissions.

The multi-PDCCH/multi-DCI may be transmitted from different TRPs. The multi-PDCCH/DCI may be multiplexed using time multiplexing (TDM)/frequency multiplexing (FDM)/spatial multiplexing (SDM). For example, when the PDCCH repetition (TDM PDCCH repetition) is performed using time multiplexing, the PDCCHs transmitted from different TRPs are allocated to different time domains.

A case is assumed in which one or more physical shared channels is scheduled using the multi-PDCCH/DCI. One or more physical shared channels may be, for example, the same (or one) physical shared channel, or a plurality of physical shared channels scheduled in the same time domain. In such a case, how to control the QCL/TCI corresponding to the physical shared channel(s) (for example, PDSCH(s)) scheduled by the plurality of PDCCHs (or DCI) transmitted in different time domains poses a problem.

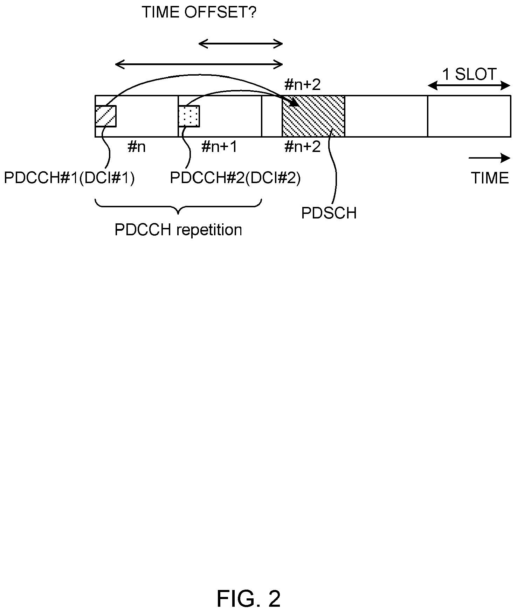

For example, how the UE determines a time offset between the plurality of PDCCHs (or DCI) transmitted in different time domains and the shared channel (for example, the PDSCH) scheduled by the plurality of PDCCHs poses a problem (see FIG. 2).

FIG. 2 shows an example of a case in which PDCCHs are repeatedly transmitted (or mapped) in slots #n to #n+1, and a PDSCH is scheduled in slot #n+2 by the plurality of PDCCHs. The PDCCHs (or control resource sets) mapped to respective slots may be mapped to the entire time domain in the slots (for example, all of the symbols), or may be mapped to a part of the time domain (for example, a part of consecutive or non-consecutive symbols).

In this case, how the UE determines the time offset between the PDSCH and each PDCCH/DCI for scheduling the PDSCH poses a problem.

Alternatively, when the PDCCH/DCI does not include information (for example, the TCI field) related to the TCI state, how the UE determines the QCL/TCI corresponding to the PDSCH (or quasi-co-location for the antenna ports of the PDSCH) poses a problem.

The inventors of the present invention studied how the UE performs determination of QCL/TCI corresponding to a physical shared channel when scheduling of the physical shared channel is performed using a plurality of (pieces of) PDCCHs/DCI, and came up with the idea of the present embodiment.

Embodiments according to the present disclosure will be described in detail with reference to the drawings as follows. Note that respective aspects described below may each be used individually, or at least two of the aspects may be applied in combination.

In the present disclosure, "A/B" may be interpreted as at least one of A and B, and "A/B/C" may be interpreted as at least one of A, B, and C.

In the following, description will be given by taking an example of a case in which the PDSCH is scheduled by the PDCCHs/DCI, but this is not restrictive. The present disclosure may be applied to a case in which the PUSCH is scheduled by the PDCCHs/DCI. In the following description, the TCI/QCL may be interpreted as TCI state/QCL assumption.

In the following, description will be given by taking an example of a case (inter-slot PDCCH repetition) in which PDCCH repetition (or a plurality of PDCCHs) is transmitted in different slots, but transmission of the PDCCHs is not limited to the unit of the slot. The present disclosure may also be applied to a case (intra-slot PDCCH repetition) in which the PDCCH repetition (or a plurality of PDCCHs) is transmitted within the same slot, a case in which the PDCCH repetition (or a plurality of PDCCHs) is transmitted in the unit of the mini-slot/sub-slot, or a case in which the PDCCH repetition (or a plurality of PDCCHs) is transmitted in the unit of a given symbol.

### (First Aspect)

A first aspect will describe an example of a method of determining the time offset between the PDCCHs/DCI and the PDSCH when the PDSCH is scheduled using the plurality of (pieces of) PDCCHs/DCI.

In PDCCH repetition (for example, TDM PDCCH repetition) transmitted in different time domains, the time offset between reception of the PDCCH (or the DCI) and its corresponding PDSCH may be determined based on a specific PDCCH. In other words, the UE may select a specific PDCCH (or DCI) out of the plurality of PDCCHs (or pieces of DCI), and determine whether or not the time offset between the specific PDCCH and its corresponding PDSCH is equal to or greater than a given threshold (for example, timeDurationForQCL).

The specific PDCCH (or DCI) may be at least one of the following option 1-1 to option 1-5.

### <Option 1-1>

The specific PDCCH used for determination of the time offset may be determined based on transmission timing/time-domain transmission order of each PDCCH.

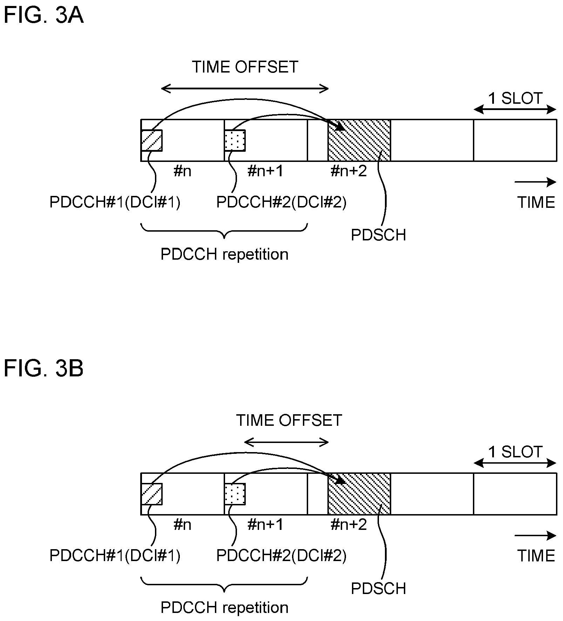

For example, the PDCCH (for example, 1st PDCCH) transmitted first in the time domain may be the specific PDCCH (see FIG. 3A). FIG. 3A shows an example of a case in which PDCCHs #1 and #2 are respectively repeatedly transmitted in slots #n to #n+1, and a PDSCH is scheduled in slot #n+2 by PDCCHs #1 and #2. FIG. 3A shows a case in which the number of PDCCH repetitions is two, but the number of PDCCH repetitions is not limited to this and may be three or more.

In this case, the UE may compare the time offset between the 1st PDCCH (PDCCH #1 in FIG. 3A) and the PDSCH (1st PDCCH-PDSCH time offset) and the given threshold (for example, timeDurationForQCL).

When the 1st PDCCH-PDSCH time offset is smaller than the given threshold (or is less than the given threshold), the UE may assume that a given default QCL/TCI corresponds to the PDSCH scheduled by the plurality of (pieces of) PDCCHs/DCI. In the present disclosure, the given default QCL/TCI may be defined in a specification, or may be configured from the base station to the UE by using higher layer signaling or the like. The given threshold (for example, timeDurationForQCL) may be configured from the base station to the UE by using higher layer signaling or the like, or may be determined based on a UE capability reported by the UE.

When the 1st PDCCH-PDSCH time offset is equal to or greater than the given threshold, the UE may assume that the TCI (or the QCL corresponding to the TCI) indicated by the DCI corresponds to the PDSCH scheduled by the plurality of (pieces of) PDCCHs/DCI (case 1). When the TCI is not notified in the DCI (or the TCI field is not included in the DCI), the UE may assume that the given default QCL/TCI corresponds to the PDSCH scheduled by the plurality of (pieces of) PDCCHs/DCI (case 2).

In the present disclosure, the given default QCL/TCI in case 2 may be different from the given default QCL/TCI applied when the time offset is smaller than the given threshold. For example, the given default QCL/TCI in case 2 may be determined based on a CORESET/transmission parameter corresponding to a given PDCCH/DCI.

Alternatively, the specific PDCCH may be the PDCCH (for example, the last PDCCH) transmitted last in the time domain (see FIG. 3B). In this case, the UE may compare the last PDCCH (PDCCH #2 in FIG. 3B)-PDSCH time offset and the threshold.

### <Option 1-2>

The specific PDCCH used for determination of the time offset may be determined based on the TCI state (for example, a TCI state index/TCI ID) associated with each PDCCH.

For example, the PDCCH corresponding to the TCI state having the lowest index (PDCCH with lowest TCI state ID) may be the specific PDCCH. In this case, the UE may compare the PDCCH corresponding to the TCI state having the lowest index-PDSCH time offset and the given threshold (for example, timeDurationForQCL).

When the PDCCH corresponding to the TCI state having the lowest index-PDSCH time offset is smaller than the given threshold, the UE may assume that the given default QCL/TCI corresponds to the PDSCH scheduled by the plurality of (pieces of)

### PDCCHs/DCI.

When the PDCCH corresponding to the TCI state having the lowest index-PDSCH time offset is equal to or greater than the given threshold, the UE may assume that the TCI (or the QCL corresponding to the TCI) indicated by the DCI corresponds to the PDSCH scheduled by the plurality of (pieces of) PDCCHs/DCI (case 1). When the TCI is not notified in the DCI (or the TCI field is not included in the DCI), the UE may assume that the given default QCL/TCI corresponds to the PDSCH scheduled by the plurality of (pieces of) PDCCHs/DCI (case 2).

Alternatively, the specific PDCCH may be the PDCCH corresponding to the TCI state having the highest index (PDCCH with highest TCI state ID). In this case, the UE may compare the PDCCH corresponding to the TCI state having the highest index-PDSCH time offset and the given threshold.

### <Option 1-3>

The specific PDCCH used for determination of the time offset may be determined based on the TRP (for example, a TRP index/TRP ID) associated with each PDCCH. The TRP index/TRP ID may be replaced with a CORESET pool index/CORESET Pool ID.

For example, the PDCCH corresponding to the TRP having the lowest index (PDCCH with lowest TRP ID) may be the specific PDCCH. In this case, the UE may compare the PDCCH corresponding to the TRP having the lowest index-PDSCH time offset and the given threshold (for example, timeDurationForQCL).

When the PDCCH corresponding to the TRP having the lowest index-PDSCH time offset is smaller than the given threshold, the UE may assume that the given default QCL/TCI corresponds to the PDSCH scheduled by the plurality of (pieces of) PDCCHs/DCI.

When the PDCCH corresponding to the TRP having the lowest index-PDSCH time offset is equal to or greater than the given threshold, the UE may assume that the TCI (or the QCL corresponding to the TCI) indicated by the DCI corresponds to the PDSCH scheduled by the plurality of (pieces of) PDCCHs/DCI (case 1). When the TCI is not notified in the DCI (or the TCI field is not included in the DCI), the UE may assume that the given default QCL/TCI corresponds to the PDSCH scheduled by the plurality of (pieces of) PDCCHs/DCI (case 2).

Alternatively, the specific PDCCH may be the PDCCH corresponding to the TRP having the highest index (PDCCH with highest TRP ID). In this case, the UE may compare the PDCCH corresponding to the TRP having the highest index-PDSCH time offset and the given threshold.

### <Option 1-4>

The specific PDCCH used for determination of the time offset may be determined based on the control resource set (for example, a CORESET index/CORESET ID) associated with each PDCCH.

For example, the PDCCH corresponding to the CORESET having the lowest index (PDCCH with lowest CORESET ID) may be the specific PDCCH. In this case, the UE may compare the PDCCH corresponding to the CORESET having the lowest index-PDSCH time offset and the given threshold (for example, timeDurationForQCL).

When the PDCCH corresponding to the CORESET having the lowest index-PDSCH time offset is smaller than the given threshold, the UE may assume that the given default QCL/TCI corresponds to the PDSCH scheduled by the plurality of (pieces of) PDCCHs/DCI.

When the PDCCH corresponding to the CORESET having the lowest index-PDSCH time offset is equal to or greater than the given threshold, the UE may assume that the TCI (or the QCL corresponding to the TCI) indicated by the DCI corresponds to the PDSCH scheduled by the plurality of (pieces of) PDCCHs/DCI (case 1). When the TCI is not notified in the DCI (or the TCI field is not included in the DCI), the UE may assume that the given default QCL/TCI corresponds to the PDSCH scheduled by the plurality of (pieces of) PDCCHs/DCI (case 2).

Alternatively, the specific PDCCH may be the PDCCH corresponding to the CORESET having the highest index (PDCCH with highest CORESET ID). In this case, the UE may compare the PDCCH corresponding to the CORESET having the highest index-PDSCH time offset and the given threshold.

### <Option 1-5>

The specific PDCCH used for determination of the time offset may be determined based on the frequency domain (for example, a control channel element index/CCE index) associated with each PDCCH. Option 1-5 may be applied to a case in which the plurality of (pieces of) PDCCHs/DCI are transmitted in different time domains and different frequency domains (TDM + FDM).

For example, the PDCCH corresponding to the CCE having the lowest index (PDCCH with lowest CCE index) may be the specific PDCCH. In this case, the UE may compare the PDCCH corresponding to the CCE having the lowest index-PDSCH time offset and the given threshold (for example, timeDurationForQCL).

When the PDCCH corresponding to the CCE having the lowest index-PDSCH time offset is smaller than the given threshold, the UE may assume that the given default QCL/TCI corresponds to the PDSCH scheduled by the plurality of (pieces of) PDCCHs/DCI.

When the PDCCH corresponding to the CCE having the lowest index-PDSCH time offset is equal to or greater than the given threshold, the UE may assume that the TCI (or the QCL corresponding to the TCI) indicated by the DCI corresponds to the PDSCH scheduled by the plurality of (pieces of) PDCCHs/DCI (case 1). When the TCI is not notified in the DCI (or the TCI field is not included in the DCI), the UE may assume that the given default QCL/TCI corresponds to the PDSCH scheduled by the plurality of (pieces of) PDCCHs/DCI (case 2).

Alternatively, the specific PDCCH may be the PDCCH corresponding to the CCE having the highest index (PDCCH with highest CCE index). In this case, the UE may compare the PDCCH corresponding to the CCE having the highest index-PDSCH time offset and the given threshold.

In this manner, when the PDSCH is scheduled by the repeatedly transmitted PDCCH/DCI (or the multi-PDCCH/DCI), the UE may determine the PDCCH-PDSCH time offset, based on the specific PDCCH/DCI out of the plurality of (pieces of) PDCCHs/DCI. With this, even when the PDSCH is scheduled using the plurality of (pieces of) PDCCHs/DCI transmitted in different time domains, reception of the PDSCH can be appropriately performed.

Note that at least one of option 1-1 to option 1-5 may be applied to a case in which the TCI/QCL (or the default TCI/QCL) for the PDSCH conforms to operation in Rel. 16 or later versions (for example, Rel. 16 or Re. 17). The operation in Rel. 17 (R17 behavior) may correspond to a case in which the QCL/default QCL for the PDSCH conforms to a configured/activated/indicated unified TCI state (for example, unified TCI state).

### (Second Aspect)

A second aspect will describe an example of the default TCI/QCL applied to/assumed for the PDSCH scheduled by the plurality of (pieces of) PDCCHs/DCI. Here, a case is assumed in which different CORESETs are used for the PDCCH repetition (for example, the plurality of PDCCHs transmitted in different time domains).

The default TCI/QCL may be, for example, the default TCI/QCL applied/assumed when the time offset is equal to or greater than a given threshold and the TCI is not notified in the DCI (or the TCI field is not included in the DCI). For example, the TCI/QCL described below may be applied to the default QCL/TCI of case 2 of the first aspect.

A case is assumed in which the TCI state is not notified in the DCI (or the TCI field is not included in the DCI) in a case in which the specific PDCCH-PDSCH time offset is equal to or greater than the given threshold. The given threshold may be determined based on capability information (for example, a UE capability) reported by the UE. In this case, in order to determine quasi-co-location for the antenna ports of the PDSCH (for example, PDSCH antenna port quasi co-location), the UE may assume that the TCI state/QCL assumption for the PDSCH is the same as the TCI/QCL corresponding to the CORESET used for PDCCH transmission.

In contrast, when different CORESETs are used for PDCCH repetition transmission (for example, the plurality of PDCCHs transmitted in different time domains), the UE needs to judge/determine the TCI/QCL of which CORESET corresponds to the TCI/QCL for the PDSCH. In the following, a method of determining the TCI/QCL applied to/corresponding to the PDSCH will be described.

### <PDSCH Transmission in Single TRP>

A case is assumed in which the PDCCH repetition (for example, the plurality of PDCCHs transmitted in different time domains) is transmitted in each of a plurality of CORESETs. With the PDCCH repetition, PDSCH transmission transmitted from the single TRP may be scheduled.

In the present disclosure, PDSCH transmission in the single TRP (S-TRP PDSCH Tx) may mean that PDSCH transmission or PDSCH repetition including (or using) the single TCI/QCL is configured/activated/indicated. In this case, the PDSCH transmission/PDSCH repetition including multiple TCIs/QCLs may not be configured enabled by a higher layer/MAC CE/DCI.

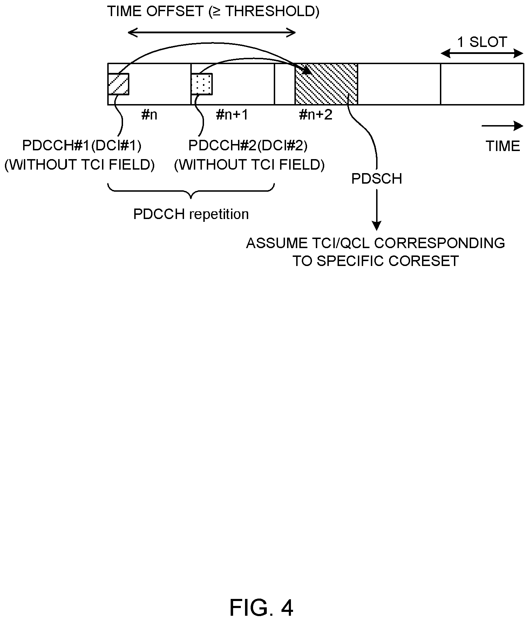

When the PDCCH/DCI-PDSCH time offset is equal to or greater than the given threshold and the TCI is not notified in the DCI (or the TCI field is not included in the DCI), the UE may assume that the TCI/QCL corresponding to the PDSCH is the same as TCI/QCL for a specific CORESET (see FIG. 4).

FIG. 4 shows an example of a case in which PDCCHs #1 and #2 are respectively repeatedly transmitted in slots #n to #n+1, and a PDSCH is scheduled in slot #n+2 by PDCCHs #1 and #2. FIG. 4 shows a case in which the number of PDCCH repetitions is two, but the number of PDCCH repetitions is not limited to this and may be three or more. Here, a case is shown in which PDCCH #1 is used as a reference for determination of the time offset, but this is not restrictive.

When the 1st PDCCH (PDCCH #1 in FIG. 4)-PDSCH time offset is equal to or greater than the given threshold (for example, timeDurationForQCL), and information related to the TCI is not included in the DCI (for example, DCI #1/DCI #2), the UE may assume that the TCI/QCL corresponding to the PDSCH is the same as the TCI/QCL for the specific CORESET.

The specific CORESET may be at least one of the following option 2-1 to option 2-5.

### [Option 2-1]

The specific CORESET may be determined based on the CORESET index/CORESET ID used for each PDCCH repetition (or each PDCCH transmission).

For example, the CORESET having the lowest index (CORESET with lowest CORESET ID) out of the plurality of CORESETs used for the PDCCH repetition may be the specific CORESET. In this case, the UE may assume that the TCI/QCL corresponding to the PDSCH is the same as the TCI/QCL for the CORESET having the lowest index.

Alternatively, the specific CORESET may be the CORESET having the highest index (CORESET with highest CORESET ID) out of the plurality of CORESETs used for the PDCCH repetition. In this case, the UE may assume that the TCI/QCL corresponding to the PDSCH is the same as the TCI/QCL for the CORESET having the highest index.

### [Option 2-2]

The specific CORESET may be determined based on the TRP index/TRP ID corresponding to each PDCCH repetition (or each PDCCH transmission). The TRP index/TRP ID may be replaced with a CORESET pool index/CORESET Pool ID.

For example, the CORESET corresponding to the TRP having the lowest index (CORESET with lowest TRP ID) out of the plurality of TRPs (or CORESET pools) used for the PDCCH repetition may be the specific CORESET. In this case, the UE may assume that the TCI/QCL corresponding to the PDSCH is the same as the TCI/QCL for the CORESET corresponding to the TRP having the lowest index.

Alternatively, the specific CORESET may be the CORESET corresponding to the TRP having the highest index (CORESET with highest TRP ID) out of the plurality of CORESETs used for the PDCCH repetition. In this case, the UE may assume that the TCI/QCL corresponding to the PDSCH is the same as the TCI/QCL for the CORESET corresponding to the TRP having the highest index.

### [Option 2-3]

The specific CORESET may be determined based on the TCI state index/TCI state ID corresponding to each PDCCH repetition (or each PDCCH transmission).

For example, the CORESET corresponding to the TCI state having the lowest index (CORESET with lowest TCI state ID) out of the plurality of TCI states used for the PDCCH repetition may be the specific CORESET. In this case, the UE may assume that the TCI/QCL corresponding to the PDSCH is the same as the TCI/QCL for the CORESET corresponding to the TCI state having the lowest index.

Alternatively, the specific CORESET may be the CORESET corresponding to the TCI state having the highest index (CORESET with highest TCI state ID) out of the plurality of TCIs used for the PDCCH repetition. In this case, the UE may assume that the TCI/QCL corresponding to the PDSCH is the same as the TCI/QCL for the CORESET corresponding to the TCI state having the highest index.

### [Option 2-4]

The specific CORESET may be determined based on transmission timing/time-domain transmission order of the CORESET corresponding to each PDCCH repetition (or each PDCCH transmission).

For example, the CORESET corresponding to the first transmitted PDCCH (for example, 1st PDCCH) out of the plurality of CORESETs used for the PDCCH repetition may be the specific CORESET. In this case, the UE may assume that the TCI/QCL corresponding to the PDSCH is the same as the TCI/QCL for the CORESET corresponding to the first PDCCH in the time domain.

Alternatively, the specific CORESET may be the CORESET corresponding to the last transmitted PDCCH (for example, last PDCCH) out of the plurality of CORESETs used for the PDCCH repetition. In this case, the UE may assume that the TCI/QCL corresponding to the PDSCH is the same as the TCI/QCL for the CORESET corresponding to the last PDCCH in the time domain.

### [Option 2-5]

The specific CORESET may be determined based on the frequency domain (for example, a control channel element index/CCE index) of the CORESET corresponding to each PDCCH repetition (or each PDCCH transmission).

For example, the CORESET corresponding to the CCE having the lowest index (CORESET with lowest CCE index) out of the plurality of CORESETs used for the PDCCH repetition may be the specific CORESET. In this case, the UE may assume that the TCI/QCL corresponding to the PDSCH is the same as the TCI/QCL for the CORESET corresponding to the CCE having the lowest index.

Alternatively, the specific CORESET may be the CORESET corresponding to the CCE having the highest index (CORESET with highest CCE index) out of the plurality of CORESETs used for the PDCCH repetition. In this case, the UE may assume that the TCI/QCL corresponding to the PDSCH is the same as the TCI/QCL for the CORESET corresponding to the CCE having the highest index.

### <PDSCH Transmission in Multi-TRPs>

A case is assumed in which the PDCCH repetition (for example, the plurality of PDCCHs transmitted in different time domains) is transmitted in each of a plurality of CORESETs. With the PDCCH repetition, PDSCH transmission transmitted from the multi-TRPs may be scheduled.

In the present disclosure, PDSCH transmission in the multi-TRPs (M-TRP PDSCH Tx) may mean that PDSCH transmission or PDSCH repetition including (or using) the plurality of TCIs/QCLs (multiple TCIs/QCLs) is configured enabled by a higher layer/MAC CE/DCI. In this case, the PDSCH transmission or PDSCH repetition including (or using) the plurality of TCIs/QCLs may be configured/activated/indicated.

When the PDCCH/DCI-PDSCH time offset is equal to or greater than the given threshold and the TCI is not notified in the DCI (or the TCI field is not included in the DCI), the UE may assume that the plurality of TCIs/QCLs corresponding to the PDSCH are the same as the TCIs/QCLs for the plurality of CORESETs used for each PDCCH transmission.

Association (or mapping) between the plurality of TCI states (for example, the plurality of default TCI states) and the plurality of PDSCH repetitions may be the same as that for when the plurality of TCI states are configured/activated/indicated for the PDSCH. For example, the TCI/QCI for the PDSCH scheduled with a given PDCCH may be associated with the TCI/QCL corresponding to the PDCCH (or the CORESET corresponding to the PDCCH).

Alternatively, when the PDCCH/DCI-PDSCH time offset is equal to or greater than the given threshold and the TCI is not notified in the DCI (or the TCI field is not included in the DCI), the UE may assume that the plurality of TCIs/QCLs corresponding to the PDSCH are the same as the TCI/QCL for a specific CORESET. The specific CORESET may be determined based on at least one of option 2-1 to option 2-5 described above. For example, the specific CORESET may be determined as in the case of PDSCH transmission in the single TRP.

In this manner, even when the information related to the TCI state is not notified in the DCI, the use of the TCI/QCL corresponding to the specific CORESET for reception of the PDSCH enables appropriate control of communication even in application of PDCCH repetition.

Note that, although the above description takes an example of a case in which the PDCCH/DCI-PDSCH time offset is equal to or greater than the given threshold and the TCI is not notified in the DCI (or the TCI field is not included in the DCI), cases in which the second aspect is applicable are not limited to this. The second aspect may be applied to a case in which the information (for example, the TCI field) related to the TCI indicated by the DCI cannot be used in determination of the TCI/QCL corresponding to the PDSCH, or cases in which the second aspect is applicable may be defined in a specification.

### (Third Aspect)

A third aspect will describe an example of the default TCI/QCL applied to/assumed for the PDSCH scheduled by the plurality of (pieces of) PDCCHs/DCI. Here, a case is assumed in which one CORESET (or a common CORESET) is used for the PDCCH repetition (for example, the plurality of PDCCHs transmitted in different time domains).

The default TCI/QCL may be, for example, the default TCI/QCL applied/assumed when the time offset is equal to or greater than a given threshold and the TCI is not notified in the DCI (or the TCI field is not included in the DCI). For example, the TCI/QCL described below may be applied to the default QCL/TCI of case 2 of the first aspect.

A case is assumed in which the TCI state is not notified in the DCI (or the TCI field is not included in the DCI) in a case in which the specific PDCCH-PDSCH time offset is equal to or greater than the given threshold. The given threshold may be determined based on capability information (for example, a UE capability) reported by the UE. In this case, in order to determine quasi-co-location for the antenna ports of the PDSCH (for example, PDSCH antenna port quasi co-location), the UE may assume that the TCI state/QCL assumption for the PDSCH is the same as the TCI/QCL corresponding to the CORESET used for PDCCH transmission.

In contrast, when one CORESET (or a common CORESET) is used for PDCCH repetition transmission (for example, the plurality of PDCCHs transmitted in different time domains), the UE needs to judge/determine a given TCI/QCL (for example, a default TCI/QCL) corresponding to the TCI/QCL for the PDSCH. In the following, a method of determining the given TCI/QCL applied to/corresponding to the PDSCH will be described.

### <PDSCH Transmission in Single TRP>

A case is assumed in which the PDCCH repetition (for example, the plurality of PDCCHs transmitted in different time domains) is transmitted in each single CORESET. With the PDCCH repetition, PDSCH transmission transmitted from the single TRP may be scheduled.

When the PDCCH/DCI-PDSCH time offset is equal to or greater than the given threshold and the TCI is not notified in the DCI (or the TCI field is not included in the DCI), the UE may assume that the TCI/QCL corresponding to the PDSCH is the same as the given TCI/QCL.

The given TCI/QCL may be at least one of the following option 3-1 to option 3-5.

### [Option 3-1]

The given TCI/QCL may be determined based on the CORESET index/CORESET ID configured for the PDCCH repetition (or each PDCCH transmission). The CORESET may be replaced with at least one of a search space and a monitoring occasion.

For example, the TCI/QCL corresponding to the CORESET having the lowest index (QCL with lowest CORESET ID) out of the CORESETs configured for the PDCCH repetition may be the given TCI/QCL. In this case, the UE may assume that the TCI/QCL corresponding to the PDSCH is the same as the TCI/QCL for the CORESET having the lowest index.

Alternatively, the given TCI/QCL may be the TCI/QCL corresponding to the CORESET having the highest index (QCL with highest CORESET ID) out of the CORESETs configured for the PDCCH repetition. In this case, the UE may assume that the TCI/QCL corresponding to the PDSCH is the same as the TCI/QCL for the CORESET having the highest index.

Note that the TCL/QCL corresponding to one CORESET used for PDCCH repetition transmission may correspond to the given TCI/QCL.

### [Option 3-2]

The given TCI/QCL may be determined based on the TRP index/TRP ID corresponding to each PDCCH repetition (or each PDCCH transmission). The TRP index/TRP ID may be replaced with a CORESET pool index/CORESET Pool ID.

For example, the TCI/QCL corresponding to the TRP having the lowest index (QCL with lowest TRP ID) out of the plurality of TRPs (or CORESET pools) used for the PDCCH repetition may be the given TCI/QCL. In this case, the UE may assume that the TCI/QCL corresponding to the PDSCH is the same as the TCI/QCL corresponding to the TRP having the lowest index.

Alternatively, the given TCI/QCL may be the TCI/QCL corresponding to the TRP having the highest index (QCL with highest TRP ID) out of the plurality of CORESETs used for the PDCCH repetition. In this case, the UE may assume that the TCI/QCL corresponding to the PDSCH is the same as the TCI/QCL corresponding to the TRP having the highest index.

### [Option 3-3]

The given TCI/QCL may be determined based on the TCI state index/TCI state ID corresponding to each PDCCH repetition (or each PDCCH transmission).

For example, the TCI/QCL corresponding to the TCI state having the lowest index (QCL with lowest TCI state ID) out of the plurality of TCI states used for the PDCCH repetition may be the given TCI/QCL. In this case, the UE may assume that the TCI/QCL corresponding to the PDSCH is the same as the TCI/QCL corresponding to the TCI state having the lowest index.

Alternatively, the given TCI/QCL may be the TCI/QCL corresponding to the TCI state having the highest index (QCL with highest TCI state ID) out of the plurality of TCI states used for the PDCCH repetition. In this case, the UE may assume that the TCI/QCL corresponding to the PDSCH is the same as the TCI/QCL corresponding to the TCI state having the highest index.

### [Option 3-4]

The given TCI/QCL may be determined based on transmission timing/time-domain transmission order of the PDCCH repetition (or each PDCCH transmission).

For example, the TCI/QCL corresponding to the first transmitted PDCCH (for example, 1st PDCCH) out of the plurality of PDCCHs may be the given TCI/QCL. In this case, the UE may assume that the TCI/QCL corresponding to the PDSCH is the same as the TCI/QCL corresponding to the first PDCCH in the time domain.

Alternatively, as the given TCI/QCL, the TCI/QCL corresponding to the last transmitted PDCCH (for example, last PDCCH) may be the given TCI/QCL. In this case, the UE may assume that the TCI/QCL corresponding to the PDSCH is the same as the TCI/QCL corresponding to the last PDCCH in the time domain.

### [Option 3-5]

The given TCI/QCL may be determined based on the frequency domain (for example, a control channel element index/CCE index) of the PDCCH repetition (or each PDCCH transmission).

For example, the TCI/QCL corresponding to the CCE having the lowest index (QCL with lowest CCE index) out of the plurality of PDCCHs may be the given TCI/QCL. In this case, the UE may assume that the TCI/QCL corresponding to the PDSCH is the same as the TCI/QCL corresponding to the CCE having the lowest index.

Alternatively, the given TCI/QCL may be the TCI/QCL corresponding to the CCE having the highest index (QCL with highest CCE index). In this case, the UE may assume that the TCI/QCL corresponding to the PDSCH is the same as the TCI/QCL corresponding to the CCE having the highest index.

### <PDSCH Transmission in Multi-TRPs>

A case is assumed in which the PDCCH repetition (for example, the plurality of PDCCHs transmitted in different time domains) is transmitted in each single CORESET. With the PDCCH repetition, PDSCH transmission transmitted from the multi-TRPs may be scheduled.

When the PDCCH/DCI-PDSCH time offset is equal to or greater than the given threshold and the TCI is not notified in the DCI (or the TCI field is not included in the DCI), the UE may assume that the plurality of TCIs/QCLs corresponding to the PDSCH are the same as one or more TCIs/QCLs corresponding to one CORESET used for each PDCCH transmission.

Association (or mapping) between one or more TCI states (for example, the plurality of default TCI states) and the plurality of PDSCH repetitions may be the same as that for when the plurality of TCI states are configured/activated/indicated for the PDSCH. For example, the TCI/QCI for the PDSCH scheduled with a given PDCCH may be associated with the TCI/QCL corresponding to the PDCCH (or the CORESET corresponding to the PDCCH).

Alternatively, when the PDCCH/DCI-PDSCH time offset is equal to or greater than the given threshold and the TCI is not notified in the DCI (or the TCI field is not included in the DCI), the UE may assume that the plurality of TCIs/QCLs corresponding to the PDSCH are the same as the given TCI/QCL. The given TCI/QCL may be determined based on at least one of option 3-1 to option 3-5 described above. For example, the specific CORESET may be determined as in the case of PDSCH transmission in the single TRP.

In this manner, even when the information related to the TCI state is not notified in the DCI, the use of the given TCI/QCL for reception of the PDSCH enables appropriate control of communication even in application of PDCCH repetition.

Note that, although the above description takes an example of a case in which the PDCCH/DCI-PDSCH time offset is equal to or greater than the given threshold and the TCI is not notified in the DCI (or the TCI field is not included in the DCI), cases in which the third aspect is applicable are not limited to this. The third aspect may be applied to a case in which the information (for example, the TCI field) related to the TCI indicated by the DCI cannot be used in determination of the TCI/QCL corresponding to the PDSCH, or cases in which the third aspect is applicable may be defined in a specification.

### (Fourth Aspect)

A fourth aspect will describe an example of UE capability information.

In the PDCCH repetition, UE capability information as to whether or not the UE can assume the default TCI/QCL for the PDSCH as the TCI/QCL for the CORESET used for PDCCH transmission may be supported.

In the PDCCH repetition using a plurality of CORESETs (for example, different CORESETs), UE capability information as to whether or not the UE can assume the default TCI/QCL for the PDSCH as the TCL/QCL for the CORESET used for PDCCH transmission may be supported.

When the UE reports corresponding UE capability information or is configured/activated/indicated with a given higher layer parameter, the UE may perform control to apply at least one of the first aspect to the third aspect.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

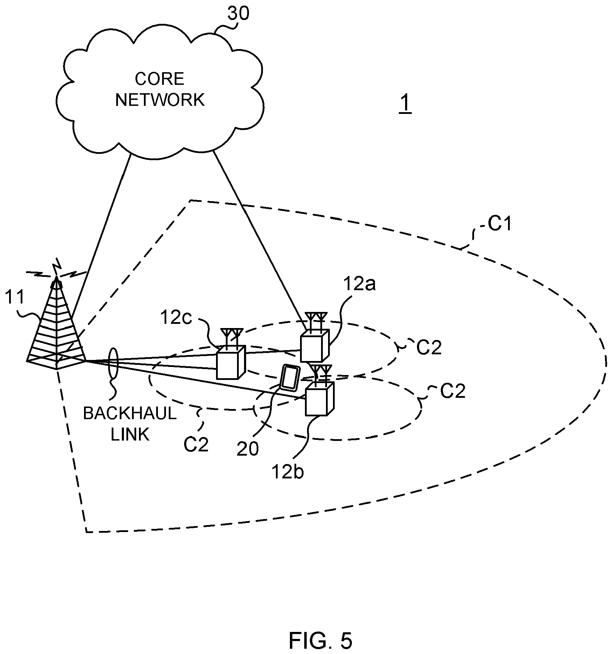

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

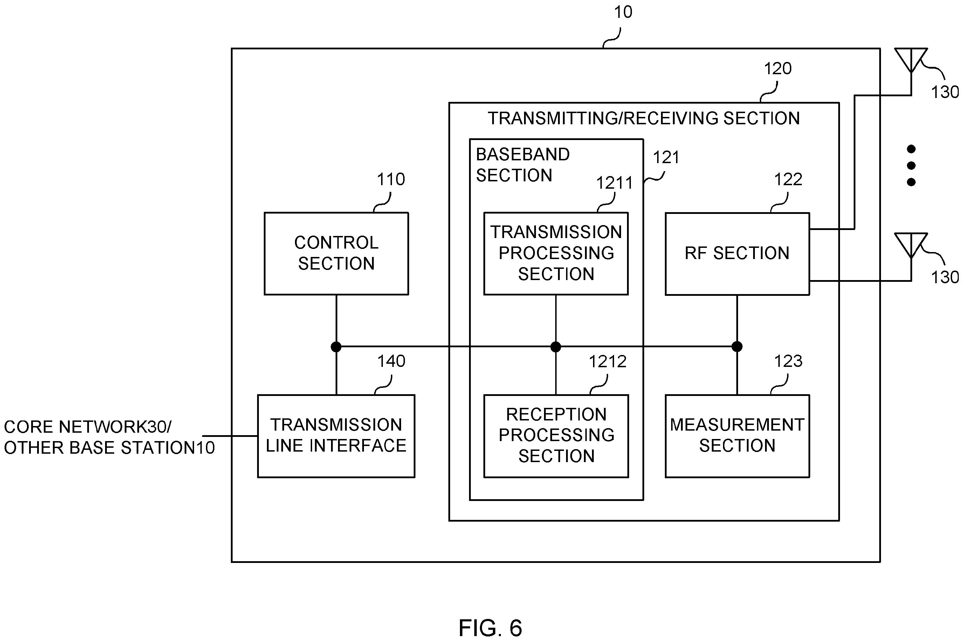

FIG. 6 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a physical shared channel scheduled by using a plurality of downlink control channels allocated to different time domains.

The transmitting/receiving section 120 may control at least one of quasi-co-location (QCL) and a transmission configuration indication (TCI) state corresponding to the physical shared channel, based on a time offset between a specific downlink control channel of the plurality of downlink control channels and the physical shared channel and a given threshold.

### (User Terminal)

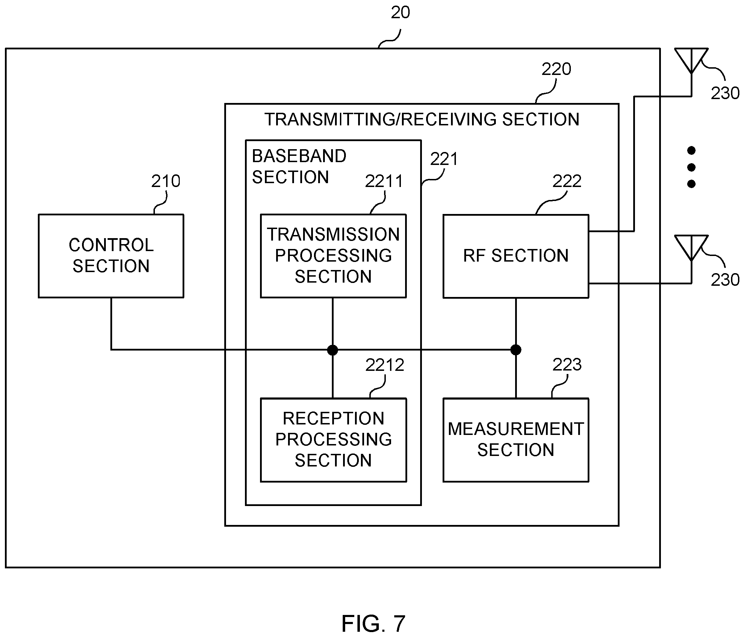

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the transmission line interface 240.

The transmitting/receiving section 220 may receive a physical shared channel scheduled by a plurality of downlink control channels allocated to different time domains.

The control section 210 may determine at least one of quasi-co-location (QCL) and a transmission configuration indication (TCI) state corresponding to the physical shared channel, based on a time offset between a specific downlink control channel of the plurality of downlink control channels and the physical shared channel and a given threshold.

The control section 210 may determine the specific downlink control channel, based on at least one of transmission timing of a downlink control channel, a TCI state index corresponding to the downlink control channel, a control resource set pool index corresponding to the downlink control channel, a control resource set index corresponding to the downlink control channel, and a frequency domain used for transmission of the downlink control channel.

In a case in which the plurality of downlink control channels are transmitted using a plurality of control resource sets, when the time offset is equal to or greater than the threshold and a field for TCI is not included in the specific downlink control information, the control section 210 may assume that at least one of the QCL and the TCI state corresponding to a specific control resource set out of the plurality of control resource sets and at least one of the QCL and the TCI state corresponding to the physical shared channel are same.

In a case in which the plurality of downlink control channels are transmitted using a common control resource set, when the time offset is equal to or greater than the threshold and a field for TCI is not included in the specific downlink control information, the control section 210 may assume that at least one of the QCL and the TCI state corresponding to the specific downlink control channel and at least one of the QCL and the TCI state corresponding to the physical shared channel are same.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

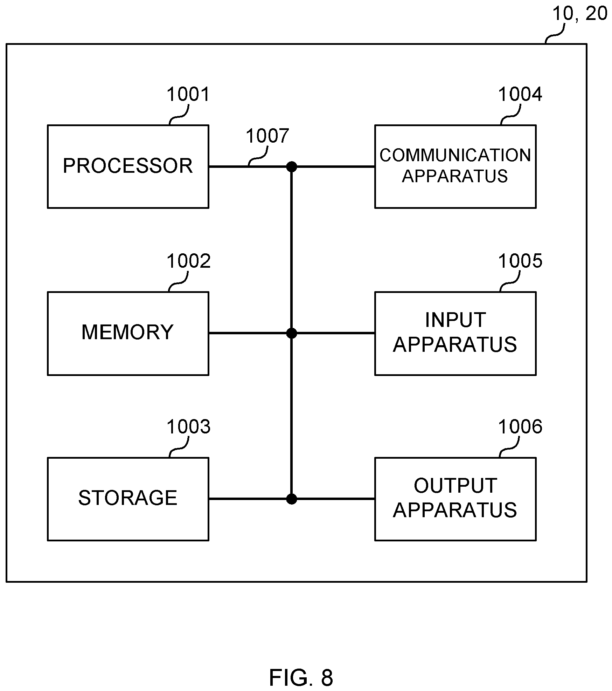

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in he present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a physical shared channel scheduled by a plurality of downlink control channels allocated to different time domains; and
a control section that determines at least one of quasi-co-location (QCL) and a transmission configuration indication (TCI) state corresponding to the physical shared channel, based on a time offset between a specific downlink control channel of the plurality of downlink control channels and the physical shared channel and a given threshold.

2. The terminal according to claim 1, wherein
the specific downlink control channel is determined based on at least one of transmission timing of a downlink control channel, a TCI state index corresponding to the downlink control channel, a control resource set pool index corresponding to the downlink control channel, a control resource set index corresponding to the downlink control channel, and a frequency domain used for transmission of the downlink control channel.

3. The terminal according to claim 1 or 2, wherein
in a case in which the plurality of downlink control channels are transmitted using a plurality of control resource sets, when the time offset is equal to or greater than the threshold and a field for TCI is not included in the specific downlink control information, the control section assumes that at least one of the QCL and the TCI state corresponding to a specific control resource set out of the plurality of control resource sets and at least one of the QCL and the TCI state corresponding to the physical shared channel are same.

4. The terminal according to claim 1 or 2, wherein
in a case in which the plurality of downlink control channels are transmitted using a common control resource set, when the time offset is equal to or greater than the threshold and a field for TCI is not included in the specific downlink control information, the control section assumes that at least one of the QCL and the TCI state corresponding to the specific downlink control channel and at least one of the QCL and the TCI state corresponding to the physical shared channel are same.

5. A radio communication method comprising:
receiving a physical shared channel scheduled by a plurality of downlink control channels allocated to different time domains; and
determining at least one of quasi-co-location (QCL) and a transmission configuration indication (TCI) state corresponding to the physical shared channel, based on a time offset between a specific downlink control channel of the plurality of downlink control channels and the physical shared channel and a given threshold.

6. A base station comprising:
a transmitting section that transmits a physical shared channel scheduled by using a plurality of downlink control channels allocated to different time domains; and
a control section that controls at least one of quasi-co-location (QCL) and a transmission configuration indication (TCI) state corresponding to the physical shared channel, based on a time offset between a specific downlink control channel of the plurality of downlink control channels and the physical shared channel and a given threshold.
